# EUROPEAN PATENT APPLICATION

(11) **EP 4 825 937 A1**
(43) Date of publication of application: **21.10.2026**
(21) Application number: 24903746.6
(22) Date of filing: 12.12.2024
(51) Int. Cl.: C09J 151/08, C08F 255/00, H01M 50/193, H01M 50/562, C09J 123/10

(54) **BATTERY ADHESIVE, BATTERY LAMINATE, BATTERY PACKAGING MATERIAL, AND TAB LEAD**

(30) Priority: 13.12.2023 JP 2023210095
(71) Applicant: Mitsui Chemicals, Inc., Tokyo 104-0028 (JP)
(72) Inventor: ICHIKAWA, Tatsuya, Tokyo 104-0028 (JP); SHIGA, Ryohei, Tokyo 104-0028 (JP); MIZOBUCHI, Yusuke, Tokyo 104-0028 (JP); GOTO, Yuuya, Tokyo 104-0028 (JP)
(74) Representative: Hoffmann Eitle
(86) International application number: PCT/JP2024/043949
(87) International publication number: WO 2025/127093

(57) **Abstract**

One embodiment of the present invention relates to a battery adhesive, a battery laminate, a battery packaging material, or a tab lead, and the battery adhesive satisfies the following requirements (i) to (iii).
(i) a graft-modified product of at least one base polymer selected from polyolefins with at least one carbodiimide monomer selected from the group consisting of a compound represented by the following formula (1) and a compound represented by the following formula (2) is contained,
(ii) 0.1 to 50 mmol of a carbodiimide group is contained per 100 g of the battery adhesive, and
(iii) a density is 0.870 to 0.940 g/cm³; 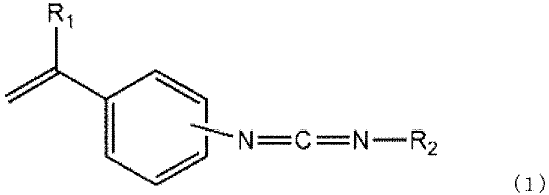 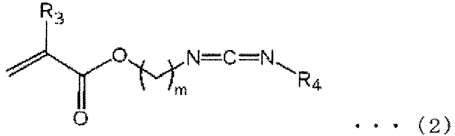 wherein in the formula (1), R₁ is a hydrogen atom or a methyl group, R₂ is an alkyl group or aryl group optionally having a substituent, in the formula (2), R₃ is a hydrogen atom or a methyl group, R₄ is an alkyl group or aryl group optionally having a substituent, and m is an integer of 2 or more.

## Description

### Technical Field

One embodiment of the present invention relates to a battery adhesive (an adhesive for a battery), a battery laminate (a laminate for a battery), a battery packaging material (a packaging material for a battery), or a tab lead.

### Background Art

Recently, lithium-ion batteries having a high energy density have been attracting attention as batteries. As packaging materials that are used for lithium-ion batteries (packaging materials for batteries), metal cans have been in use; however, recently, multilayer films that are lightweight and highly heat-dissipating and can be produced at a low cost have come to be used.

As multilayer films that are used as the packaging materials for batteries, multilayer films including an aluminum (foil) layer to prevent the intrusion of, for example, moisture into battery components (for example, positive electrodes, separators, negative electrodes, electrolytic solutions) are in use, and in the multilayer films, the aluminum layer and another layer, which is an adherend, are made to adhere to each other with an adhesive.

As such an adhesive, Patent Literature 1 describes an adhesive consisting of a maleic anhydride-modified polypropylene, and Patent Literature 2 describes an adhesive containing a polyolefin resin having a carboxy group and a multifunctional isocyanate compound.

### Citation List

### Patent Literature

[Patent Literature 1] JP2023-40153A
[Patent Literature 2] JP2010-92703A

### Summary of Invention

As described in Patent Literature 1 and 2, as adhesives (for batteries) that are used in conventional multilayer films for batteries, carboxy group-modified polyolefins have been in use. This multilayer film for a battery is in contact with an electrolytic solution; however, as a result of studies, the present inventors found that when the conventional multilayer film for a battery is in contact with such an electrolytic solution, the adhesion strength of the adhesive (for a battery), particularly, the adhesion strength between the aluminum layer and an adhesive layer, decreases and delamination is more likely to occur over time.

One embodiment of the present invention provides an adhesive for a battery capable of forming an adhesive layer having an adhesion strength that does not easily decrease even after coming into contact with an electrolytic solution and a laminate for a battery, a packaging material for a battery, and a tab lead in which the adhesive for a battery is used.

### Solution to Problem

Configuration examples of the present invention are as follows:
[1] An adhesive for a battery satisfying the following requirements (i) to (iii):
   (i) a graft-modified product of at least one base polymer selected from polyolefins with at least one carbodiimide monomer selected from the group consisting of a compound represented by the following formula (1) and a compound represented by the following formula (2) is contained;
   (ii) 0.1 to 50 mmol of a carbodiimide group is contained per 100 g of the adhesive for a battery; and
   (iii) a density is 0.870 to 0.940 g/cm³; 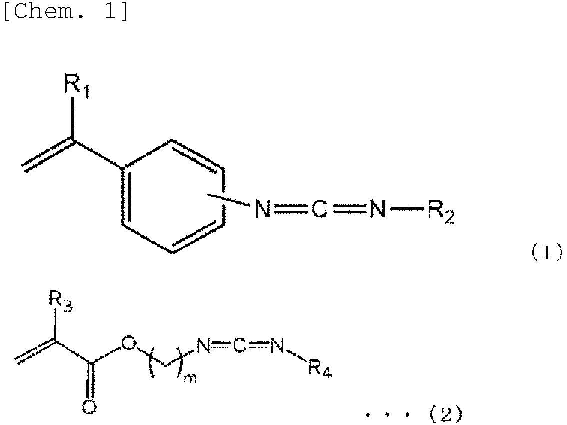 wherein in the formula (1), R₁ is a hydrogen atom or a methyl group, and R₂ is an alkyl group or aryl group optionally having a substituent, and
      in the formula (2), R₃ is a hydrogen atom or a methyl group, R₄ is an alkyl group or aryl group optionally having a substituent, and m is an integer of 2 or more.
[2] The adhesive for a battery according to [1], wherein R₂ is an alicyclic ring-containing aliphatic hydrocarbon group having 4 to 20 carbon atoms.
[3] The adhesive for a battery according to [1] or [2], wherein R₃ is a methyl group, R₄ is a branched and ring-free alkyl group, and m is 2.
[4] The adhesive for a battery according to any one of [1] to [3], wherein the base polymer is a polymer being free of at least one active hydrogen-containing group selected from a carboxy group, an acid anhydride group, an amino group, a hydroxy group, and a thiol group.
[5] A laminate for a battery comprising: an adhesive layer formed of the adhesive for a battery according to any one of [1] to [4]; and a metal layer.
[6] The laminate for a battery according to [5], wherein the metal layer is an aluminum layer.
[7] A packaging material for a battery or a tab lead comprising: the laminate for a battery according to [6].

### Advantageous Effect of Invention

According to one embodiment of the present invention, it is possible to provide an adhesive for a battery capable of forming an adhesive layer having an adhesion strength that does not easily decrease even after coming into contact with an electrolytic solution and a laminate for a battery, a packaging material for a battery, and a tab lead in which the adhesive for a battery is used. Particularly, according to one embodiment of the present invention, it is possible to form an adhesive layer having a higher adhesion strength after coming into contact with an electrolytic solution than that before coming into contact with the electrolytic solution, to provide a laminate for a battery, a packaging material for a battery, and a tab lead that are stable (resistant to the occurrence of delamination) over a long period of time using such an adhesive layer, and to provide a battery having excellent reliability.

### Description of Embodiments

### <<Adhesive for battery>>

An adhesive for a battery according to one embodiment of the present invention (hereinafter also referred to as "the present adhesive") satisfies the following requirements (i) to (iii):
(i) a graft-modified product of at least one base polymer selected from polyolefins with at least one carbodiimide monomer selected from the group consisting of a compound represented by the following formula (1) and a compound represented by the following formula (2) (hereinafter also referred to as "the present modified product") is contained;
(ii) 0.1 to 50 mmol of a carbodiimide group is contained per 100 g of the adhesive for a battery; and
(iii) a density is 0.870 to 0.940 g/cm³; 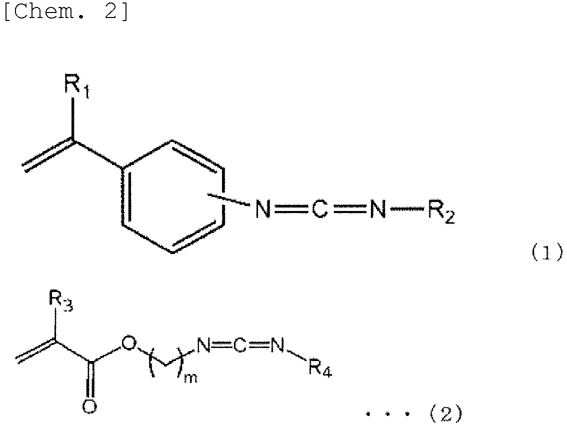 wherein in the formula (1), R₁ is a hydrogen atom or a methyl group, and R₂ is an alkyl group or aryl group optionally having a substituent, and
   in the formula (2), R₃ is a hydrogen atom or a methyl group, R₄ is an alkyl group or aryl group optionally having a substituent, and m is an integer of 2 or more.

The amount of the carbodiimide group in the present adhesive is 0.1 to 50 mmol, preferably 0.2 to 20 mmol, and more preferably 0.5 to 10 mmol per 100 g of the present adhesive.

When the amount of the carbodiimide group is within the above range, it is possible to easily form an adhesive layer having excellent adhesion to metal layers, particularly, an aluminum layer, and having a higher adhesion strength after coming into contact with an electrolytic solution than that before coming into contact with the electrolytic solution.

Specifically, the amount of the carbodiimide group is measured by a method described in Examples below.

The density of the present adhesive as measured according to JIS K 7210 is 0.870 to 0.940 g/cm³, preferably 0.880 to 0.925 g/cm³, and more preferably 0.890 to 0.920 g/cm³.

When the density is within the above range, it is possible to easily obtain an adhesive layer having excellent adhesion to metal layers, particularly, an aluminum layer.

The melt flow rate (MFR) of the present adhesive as measured at 190°C and 2.16 kg load according to JIS K 7210 is preferably 0.1 to 10 g/10 minutes, and more preferably 0.2 to 5 g/10 minutes.

When the MFR is within the above range, it is possible to easily form a desired adhesive layer or laminate for a battery by a desired molding method, which is preferable.

The present adhesive is not particularly limited as long as the present adhesive contains the present modified product, and may consist only of the present modified product.

The present adhesive contains the present modified product and is thus capable of forming an adhesive layer having a high adhesion strength to metal layers, particularly, an aluminum layer, even for a short heat sealing time.

The present modified product is not a block copolymer or a random copolymer of an olefin monomer such as ethylene or propylene and the carbodiimide monomer but a graft-modified product, and the use of the present modified product thus makes the present adhesive exhibit the above effects.

The kind of the present modified products that are used in the present adhesive may be one or more.

The content of the present modified product in the present adhesive is not particularly limited, but is usually 0.5% by mass or more, preferably 1% by mass or more, and usually 60% by mass or less, preferably 50% by mass or less, from the viewpoint of, for example, molding processability and controllability of adhesive ability, and economic efficiency.

The present adhesive may contain the present modified product and one or more olefin polymers other than the present modified product.

The olefin polymer that may be used in the present adhesive is not particularly limited as long as the olefin polymer is a polymer containing an olefin as a raw material, and various known olefin polymers can be used. Specific examples thereof include homopolymers or copolymers of α-olefins such as ethylene, propylene, 1-butene, 1-hexene, 4-methyl-1-pentene, and 1-octene (for example: high-pressure low-density polyethylene, linear low-density polyethylene (LLDPE), medium-density polyethylene, high-density polyethylene, polypropylene, poly-1-butene, poly-4-methyl-1-pentene, low-crystalline or amorphous ethylene-propylene random copolymers, ethylene-1-butene random copolymers, and propylene-1-butene random copolymers), ethylene-vinyl acetate copolymers (EVA) or saponified products thereof, ethylene-(meth)acrylic acid copolymers or metal salts (ionomers) thereof, ethylene-cyclic olefin copolymers, and polymers obtained by graft-modifying these (co)polymers with a polar compound such as a silane compound.

When the present adhesive contains a certain present modified product, as the olefin polymer, among these, the same polymer as the base polymer used for the synthesis of the present modified product is preferable, from the viewpoint of, for example, making it possible to easily obtain the present adhesive having excellent compatibility and further exhibiting a desired effect.

The raw material (for example, olefin) of the olefin polymer may be a polymer for which only a biomass-derived raw material is used, a polymer for which only a fossil fuel-derived raw material is used, or a polymer for which both a biomass-derived raw material and a fossil fuel-derived raw material are used.

The olefin polymer is preferably a polymer for which a biomass-derived raw material is used, from the viewpoint of environmental impact reduction (mainly greenhouse gas reduction).

In the present specification, the biomass-derived raw material is a raw material for which, for example, any plant-derived or animal-derived (renewable) natural raw material, including a fungus, a yeast, algae, and a bacterium, or a residue thereof, is used as a raw material, and examples thereof include raw materials containing, as carbon, a ¹⁴C isotope in a proportion of about 1 × 10⁻¹² and having a biomass carbon concentration (unit: pMC) as measured according to ASTM D 6866 of about 100 pMC. The biomass-derived raw material can be obtained by, for example, a conventionally known method.

For certain polymers, as long as the manufacturing conditions of the polymers, for example, the catalyst for polymerization, the polymerization process, and the polymerization temperature are the same, the molecular structures of polymers containing the biomass-derived raw material are the same as those of polymers composed of a fossil fuel-derived raw material, except that the ¹⁴C isotope is contained in a proportion of about 1 × 10⁻¹² to 1 × 10⁻¹⁴. Therefore, it is considered that performance does not vary between polymers containing the biomass-derived raw material and polymers composed of a fossil fuel-derived raw material.

When the present adhesive contains the olefin polymer, the content of the olefin polymer in the present adhesive is not particularly limited, but is usually 40% by mass or more, preferably 50% by mass or more, and usually 99.5% by mass or less, preferably 99% by mass or less, from the viewpoint of, for example, molding processability and controllability of adhesive ability, and economic efficiency.

Various additives other than the present modified product and the olefin polymer may be added to the present adhesive as required to an extent that the object of the present invention is not impaired.

Examples of the additive include a softener, a stabilizer, a filler, an antioxidant, a crystal nucleating agent, a wax, a thickener, a mechanical stability-imparting agent, a leveling agent, a wetting agent, a film-forming aid, a crosslinking agent, a preservative, a rust inhibitor, a pigment, a dispersant, an antifreezing agent, an antifoaming agent, a tackifier, another thermoplastic polymer, water, and an organic solvent, and each of these may be used alone or two or more.

The additive may be an additive for which only a biomass-derived raw material is used as a raw material thereof, an additive for which only a fossil fuel-derived raw material is used, or an additive for which both a biomass-derived raw material and a fossil fuel-derived raw material are used.

The present adhesive can be used in various known forms of adhesives, for example, as an aqueous dispersion type adhesive, an organic solvent type adhesive, and a hot melt type adhesive.

An adhesion target of the present adhesive is not particularly limited as long as the adhesion target is a material that is used for batteries, particularly, for example, packaging materials for batteries or tab leads, and examples thereof include layers containing or composed of metal; a thermoplastic resin such as polyester, polyphenylene sulfide, polyamide, polyacetal, polycarbonate, poly(meth)acrylate, an olefin polymer, polystyrene, rubber, a modified fluororesin, a biomass plastic, a biodegradable polymer, or other engineering plastic; or a thermosetting resin.

Among these, the present adhesive has excellent adhesion to metal layers, particularly, an aluminum layer, and is thus preferably used as an adhesive for these layers, from the viewpoint of, for example, further exhibiting the effects of the present invention.

### <Present modified product>

The present modified product is a graft-modified product of at least one base polymer selected from polyolefins with at least one carbodiimide monomer selected from the group consisting of a compound represented by the following formula (1) and a compound represented by the following formula (2), in other words, a graft-modified product of at least one base polymer selected from polyolefins graft-modified with at least one carbodiimide monomer selected from the group consisting of a compound represented by the following formula (1) and a compound represented by the following formula (2). In addition, the present modified product can also be said to be a graft-modified product including at least one base polymer portion selected from polyolefins and a graft portion derived from at least one carbodiimide monomer selected from the group consisting of the compound represented by the following formula (1) and the compound represented by the following formula (2).

The graft ratio in the present modified product is preferably 0.3% by mass or more, more preferably 0.5% by mass or more, and preferably 8% by mass or less, more preferably 5% by mass or less, from the viewpoints that the present modified product can be easily synthesized, a graft-modified product having more excellent adhesion can be easily obtained, and the obtained graft-modified product does not become too hard.

The graft ratio is the mass of the structure derived from the carbodiimide monomer in the graft-modified product and can be determined by ¹H-NMR measurement, specifically by the method described in Examples below.

### [Carbodiimide monomer]

The carbodiimide monomer that is used for graft-modification of the base polymer is at least one selected from the group consisting of a compound represented by the following formula (1) and a compound represented by the following formula (2). Between these, the compound represented by the following formula (2) is preferable, from the viewpoints that, for example, the present adhesive having superior adhesion to metal layers, particularly, an aluminum layer, can be easily obtained.

Two or more carbodiimide monomers may be used for graft-modification of the base polymer, but usually one carbodiimide monomer is used.

In the case of using, for example, maleic anhydride that has been conventionally used, for the graft modification, water that is contained in an electrolytic solution and, for example, the maleic anhydride react with each other, and an acid (for example, hydrogen fluoride) is generated. It is considered that the adhesion strength between the adhesive and an adhesion target thereof decreases due to the generation of this acid (for example, hydrogen fluoride). On the other hand, when the carbodiimide monomer is used, since the bond is less likely to be cut than that in modification with, for example, maleic anhydride, an acid (for example, hydrogen fluoride) is thus less likely to be generated, and it is possible to suppress a decrease in the adhesion strength.

The carbodiimide monomer may be a biomass-derived monomer, may be a fossil fuel-derived monomer, or may be a monomer derived from biomass and a fossil fuel.

The carbodiimide monomer is preferably a biomass-derived monomer or a monomer derived from biomass and a fossil fuel, from the viewpoint of environmental impact reduction (mainly greenhouse gas reduction).

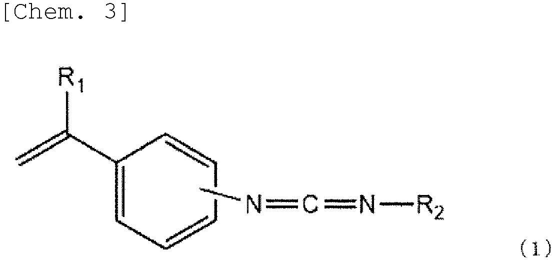

In the formula (1), R₁ is a hydrogen atom or a methyl group, and is preferably a hydrogen atom, from the viewpoint of, for example, easily obtaining the present modified product having a high graft ratio.

In the formula (1), R₂ is an alkyl group or aryl group optionally having a substituent. The alkyl group optionally having a substituent may be chain-like (may be linear or branched) or may include an alicyclic ring.

The number of carbon atoms of the alkyl group optionally having a substituent is preferably 1 or more, and more preferably 3 or more, and is preferably 20 or less, more preferably 12 or less, and still more preferably 8 or less. In addition, the number of carbon atoms of the aryl group optionally having a substituent is preferably 5 or more, and more preferably 6 or more, and is preferably 20 or less, more preferably 12 or less, and still more preferably 8 or less.

Examples of the substituent which the alkyl group and the aryl group may have include a halogen atom, a hydrocarbon group having 1 to 8 carbon atoms, an alkoxy group having 1 to 8 carbon atoms, a carboxylic acid ester group having 1 to 8 carbon atoms, a sulfonic acid ester group having 1 to 8 carbon atoms, a carbonyl group having 1 to 8 carbon atoms, an amide group having 1 to 8 carbon atoms, an amino group having 1 to 8 carbon atoms, a sulfide group having 1 to 8 carbon atoms, a phosphoric acid ester group having 1 to 8 carbon atoms, an alkylsilyl group having 1 to 8 carbon atoms, and an alkoxysilyl group having 1 to 8 carbon atoms.

Among these, the R₂ is preferably an alicyclic ring-containing aliphatic hydrocarbon group having 4 to 20 carbon atoms, and more preferably an alicyclic hydrocarbon group having 5 to 7 carbon atoms, from the viewpoint of, for example, the solubility of the carbodiimide monomer, the availability thereof, and the ease of purification of the resulting graft-modified product.

Examples of the alicyclic ring include a cyclobutyl ring, a cyclopentyl ring, a cyclohexyl ring, a cycloheptyl ring, and these rings having a hydrocarbon group. Further, the alicyclic ring may be a polycyclic ring such as an adamantyl ring and a methyladamantyl ring.

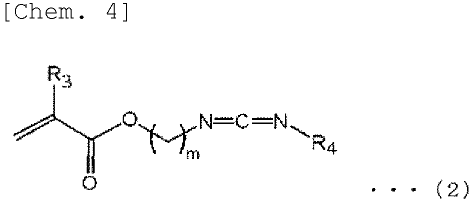

In the formula (2), R₃ is a hydrogen atom or a methyl group, and is preferably a methyl group from the viewpoints that, for example, the present adhesive having an excellent adhesion strength to metal layers, particularly, an aluminum layer, can be easily obtained.

In the formula (2), R₄ is an alkyl group or aryl group optionally having a substituent. The alkyl group optionally having a substituent may be chain-like (may be linear or branched) or may include an alicyclic ring.

The number of carbon atoms of the alkyl group optionally having a substituent is preferably 1 or more, and more preferably 3 or more, and is preferably 20 or less, more preferably 12 or less, and still more preferably 8 or less. In addition, the number of carbon atoms of the aryl group optionally having a substituent is preferably 5 or more, and more preferably 6 or more, and is preferably 20 or less, more preferably 12 or less, and still more preferably 8 or less.

Examples of the alicyclic ring include a cyclobutyl ring, a cyclopentyl ring, a cyclohexyl ring, a cycloheptyl ring, and these rings having a hydrocarbon group. Further, the alicyclic ring may be a polycyclic ring such as an adamantyl ring and a methyladamantyl ring.

Examples of the substituent which the alkyl group and the aryl group may have include a halogen atom, a hydrocarbon group having 1 to 8 carbon atoms, an alkoxy group having 1 to 8 carbon atoms, a carboxylic acid ester group having 1 to 8 carbon atoms, a sulfonic acid ester group having 1 to 8 carbon atoms, a carbonyl group having 1 to 8 carbon atoms, an amide group having 1 to 8 carbon atoms, an amino group having 1 to 8 carbon atoms, a sulfide group having 1 to 8 carbon atoms, a phosphoric acid ester group having 1 to 8 carbon atoms, an alkylsilyl group having 1 to 8 carbon atoms, and an alkoxysilyl group having 1 to 8 carbon atoms.

Among these, the R₄ is preferably a branched and ring-free alkyl group, more preferably a branched and ring-free alkyl group having 3 to 7 carbon atoms, from the viewpoint of, for example, the stability of the carbodiimide group improving in the air and during heating, the yield increasing during the synthesis of the present modified product, and the reduction of the manufacturing cost and from the viewpoints that, for example, the present adhesive having an excellent adhesion strength to metal layers, particularly, an aluminum layer, can be easily obtained.

When R₄ is ring-free, steric hindrance attributed to a ring structure is suppressed, and the reactivity of the carbodiimide group becomes favorable.

Suitable examples of the branched and ring-free alkyl group include an isopropyl group, a sec-butyl group, an isobutyl group, a tert-butyl group, a 1-methylbutyl group, a 1,2-dimethylpropyl group, a 2-methylbutyl group, a 3-methylbutyl group, a 1-ethylpropyl group, a 1,1-dimethylpropyl group, a 2,2-dimethylpropyl group, a 1-methylpentyl group, a 1,2-dimethylbutyl group, a 1,3-dimethylbutyl group, a 1,2,2-trimethylpropyl group, a 2-methylpentyl group, a 2,2-dimethylbutyl group, a 2,3-dimethylbutyl group, a 2-ethylbutyl group, a 3-methylpentyl group, a 3,3-dimethylbutyl group, a 4-methylpentyl group, a 1-ethyl-2-methylpropyl group, a 1-ethylbutyl group, a 1,1-dimethylbutyl group, a 1,1,2-trimethylpropyl group, a 1-ethyl-1-methylpropyl group, a 1-methylhexyl group, a 1,2-dimethylpentyl group, a 1,3-dimethylpentyl group, a 1,4-dimethylpentyl group, a 1,2,3-trimethylbutyl group, a 1,2,2-trimethylbutyl group, a 1,3,3-trimethylbutyl group, a 2-methylhexyl group, a 2,3-dimethylpentyl group, a 2,4-dimethylpentyl group, a 2,3,3-trimethylbutyl group, a 1,1-dimethylpentyl group, a 1,1,2-trimethylbutyl group, a 1,1,3-trimethylbutyl group, a 1,1,2,2-tetramethylpropyl group, a 2,2-dimethylpentyl group, a 2,2,3-trimethylbutyl group, a 3-methylhexyl group, a 3,4-dimethylpentyl group, a 3,3-dimethylpentyl group, a 1-ethylpentyl group, a 1-ethyl-2-methylbutyl group, a 1-ethyl-3-methylbutyl group, a 1-ethyl-2,2-dimethylpropyl group, a 2-ethylpentyl group, a 2-ethyl-3-methylbutyl group, a 1-ethyl-1-methylbutyl group, a 1-ethyl-1,2-dimethylpropyl group, a 3-ethylpentyl group, a 1,1-diethylpropyl group, a 2,2-diethylpropyl group, a 1-propylbutyl group, a diisopropylmethyl group, and a 1-isopropylbutyl group. Between these, the tert-butyl group is preferable, from the viewpoints that, for example, the present adhesive having an excellent adhesion strength to metal layers, particularly, an aluminum layer, can be easily obtained.

In formula (2), m is an integer of 2 or more, and is preferably an integer of 2 to 6, more preferably an integer of 2 to 4, and particularly preferably 2, from the viewpoint of, for example, the solubility of the carbodiimide monomer, the availability thereof, and the ease of purification of the resulting graft-modified product.

### [Base polymer]

The base polymer before being graft-modified with the carbodiimide monomer is at least one polymer selected from polyolefins.

Specific examples of the olefin include ethylene, propylene, 1-butene, 1-pentene, 1-hexene, 1-octene, 1-decene, and 4-methyl-1-pentene.

The polyolefin may be a homopolymer of any of these olefins, a copolymer of two or more of these olefins, or a copolymer of one or more of these olefins and one or more of the comonomers to be described below. Among these, the polyolefin is preferably at least one polymer selected from an ethylene polymer, a propylene polymer, and a butene polymer. The polyolefin is more preferably at least one polymer selected from an ethylene polymer and a propylene polymer, from the viewpoint of, for example, excellent separability from impurities after the graft reaction, and, in the case of using a solvent in the graft reaction, excellent solubility in the solvent.

Two or more of the base polymers may be used in the present modified product, but usually one is used.

The base polymer is preferably a polymer being free of at least one active hydrogen-containing group selected from a carboxy group, an acid anhydride group, an amino group, a hydroxy group, and a thiol group, from the viewpoint of, for example, further exhibiting the effects of the present invention.

Further, the base polymer is also preferably a polymer being free of a group that is easily converted into a group having active hydrogen by, for example, water, such as a carboxylic acid derivative group such as acid halide, amide, imide, or ester, or an epoxy group, from the viewpoint of, for example, further exhibiting the effects of the present invention.

The weight average molecular weight (Mw) of the base polymer is not particularly limited, but is preferably 100,000 or more, more preferably 150,000 or more, and preferably 1,000,000 or less, more preferably 700,000 or less, from the viewpoint of, for example, the ease of synthesis of the present modified product.

The number-average molecular weight (Mn) of the base polymer is also not particularly limited, but is preferably 10,000 or more, more preferably 20,000 or more, and preferably 500,000 or less, more preferably 300,000 or less, from the same reason.

The molecular weight distribution (Mw/Mn) of the base polymer is also not particularly limited, but is preferably 1.5 or more, more preferably 2.0 or more, and is preferably 7.0 or less, more preferably 6.0 or less.

The Mw and Mn are values measured under the following conditions using HLC-8321 GPC/HT type gel permeation chromatograph (GPC) manufactured by Tosoh Corporation.
Separation column: TSKgel GMH₆-HT (two columns) and TSKgel GMH₆-HTL (two columns) (both 7.5 mm I.D. × 30 cm, manufactured by Tosoh Corporation)
Column temperature: 140°C
Mobile phase: o-dichlorobenzene (containing 0.025% dibutylhydroxytoluene (BHT))
Developing rate: 1.0 mL/min
Sample concentration: 0.1% (w/v)
Sample injection volume: 0.4 mL
Detector: Differential refractometer
Calibration of apparatus: Calibrated using monodispersed polystyrene (manufactured by Tosoh Corporation, #3std set)

The base polymer can be synthesized by a conventionally known method, or a commercially available product may be used.

The conventionally known method is not particularly limited, and examples thereof include a method using a coordination polymerization catalyst system containing a transition metal. Specific examples thereof include a method in which an olefin such as ethylene or propylene and, as necessary, a comonomer to be described below are (co)polymerized in the presence of a catalyst such as a magnesium chloride-supported titanium catalyst, a vanadium catalyst containing a soluble vanadium compound and an alkylaluminum halide compound, or a metallocene catalyst containing a metallocene compound and an organoaluminumoxy compound.

As the raw material (for example, the olefin and/or the monomer such as a comonomer to be described below) of the base polymer, only a biomass-derived raw material may be used, only a fossil fuel-derived raw material may be used, or both a biomass-derived raw material and a fossil fuel-derived raw material may be used.

The base polymer is preferably a polymer for which a biomass-derived raw material is used, from the viewpoint of environmental impact reduction (mainly greenhouse gas reduction).

### [Ethylene polymer]

The ethylene polymer is not particularly limited as long as the content of a structural unit derived from ethylene in the polymer is 50% by mass or more, and may be a homopolymer of ethylene or a copolymer of ethylene and a comonomer. In the case of the copolymer, the structure is not particularly limited.

Examples of the comonomer include at least one monomer selected from propylene, an α-olefin having 4 to 20 carbon atoms, and conjugated polyenes, and among these, propylene and an α-olefin having 4 to 20 carbon atoms are preferable.

The α-olefin having 4 to 20 carbon atoms may be linear or branched, and examples thereof include 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene.

The content of the structural unit derived from the comonomer in the ethylene polymer is preferably 50% by mass or less, more preferably 30% by mass or less, and particularly preferably 20% by mass or less, from the viewpoint of, for example, the unlikelihood of blocking of pellets or powder and easy handling of pellets or powder. An ethylene polymer having a propylene-derived or butene-derived structural unit content of 50% by mass is referred to as an ethylene polymer in the present specification.

### [Propylene polymer]

The propylene polymer is not particularly limited as long as the content of a structural unit derived from propylene in the polymer is 50% by mass or more, and may be a homopolymer of propylene or a copolymer of propylene and a comonomer. The structure of these (co)polymers is not particularly limited.

Examples of the comonomer include at least one monomer selected from ethylene, an α-olefin having 4 to 20 carbon atoms, and conjugated polyenes, and among these, ethylene and an α-olefin having 4 to 20 carbon atoms are preferable.

Examples of the α-olefin having 4 to 20 carbon atoms include, for example, the same α-olefins as the α-olefins having 4 to 20 carbon atoms mentioned in the section of the ethylene polymer.

The content of the structural unit derived from the comonomer in the propylene polymer is preferably 50% by mass or less, more preferably 30% by mass or less, and particularly preferably 20% by mass or less, from the viewpoint of, for example, the unlikelihood of blocking of pellets or powder and easy handling of pellets or powder. A propylene polymer having a butene-derived structural unit content of 50% by mass is referred to as a propylene polymer in the present specification.

### [Butene polymer]

The butene polymer is not particularly limited as long as the content of a structural unit derived from butene in the polymer is 50% by mass or more, and may be a homopolymer of butene, particularly 1-butene, or a copolymer of butene (particularly 1-butene) and a comonomer. The structure of these (co)polymers is not particularly limited.

Examples of the comonomer include at least one monomer selected from ethylene, propylene, an α-olefin having 5 to 20 carbon atoms, and conjugated polyenes, and among these, ethylene, propylene, and an α-olefin having 5 to 20 carbon atoms are preferable.

Examples of the α-olefin having 5 to 20 carbon atoms include, for example, the same α-olefins as the α-olefins having 5 to 20 carbon atoms mentioned in the section of the ethylene polymer.

The content of the structural unit derived from the comonomer in the butene polymer is preferably 50% by mass or less, more preferably 30% by mass or less, and particularly preferably 20% by mass or less, from the viewpoint of, for example, the unlikelihood of blocking of pellets or powder and easy handling of pellets or powder.

### <Method for synthesizing present modified product>

There are no particular limitations on a method for synthesizing the present modified product, as long as a graft-modified product obtained by graft-modifying the base polymer with the carbodiimide monomer can be obtained. The method is preferably a method in which a radical initiator and the carbodiimide monomer are added to a solution in which the base polymer is dissolved or dispersed in a solvent, preferably a solution in which the base polymer is dissolved in an organic solvent, to cause a reaction (graft reaction), from the viewpoint of, for example, easily synthesizing the present modified product. When a reaction apparatus having a stirring capability capable of homogeneously fluidizing the base polymer is used, the solvent may not be used.

According to the above method, since graft polymerization occurs, a graft-modified product is obtained.

The amount of the carbodiimide monomer used in the graft reaction is preferably 10 to 1000 mol, and more preferably from 10 to 800 mol, based on 1 mol of the base polymer, from the viewpoint, for example, that the present modified product having a graft ratio within the above range can be easily obtained, and the formation of a polymer of the carbodiimide monomer itself (hereinafter, also referred to as "non-grafted polymer") can be suppressed.

Examples of the radical initiator include organic peroxides and azo compounds, and specific examples thereof include organic peroxides such as benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy) hexane, tert-butyl perbenzoate, tert-butyl perphenylacetate, tert-butyl perisobutyrate, tert-butyl persec-octoate, tert-butyl perpivalate, cumyl perpivalate, tert-butyl perdiethylacetate, and tert-butylperoxyisopropyl monocarbonate(tert-butylperoxyisopropyl monocarbonate); and azo compounds such as azobisisobutyronitrile and dimethylazoisobutyrate. Among these, organic peroxides such as dicumyl peroxide, di-tert-butyl peroxide, 2,5-dimethyl-2,5-di(tert-butylperoxy)hexyne-3, 2,5-dimethyl-2,5-di(tert-butylperoxy) hexane, 1,4-bis(tert-butylperoxyisopropyl)benzene, and tert-butylperoxyisopropyl monocarbonate are preferable.

The radical initiator may be used alone or two or more kinds thereof may be used.

The amount of the radical initiator to be used in the graft reaction is preferably 0.01 mol or more, more preferably 0.05 mol or more, and preferably 0.7 mol or less, more preferably 0.5 mol or less, based on 1 mol of the carbodiimide monomer, from the viewpoint, for example, that the graft reaction efficiently occurs and the present modified product having a graft ratio in the above range can be easily obtained.

The organic solvent is preferably an organic solvent that does not significantly inhibit the graft reaction of the carbodiimide monomer and has affinity for the base polymer in a temperature range in which the graft reaction is performed. Specific examples of such an organic solvent include aromatic hydrocarbon solvents such as benzene, toluene, and xylene; aliphatic hydrocarbon solvents such as pentane, hexane, heptane, octane, nonane, and decane; alicyclic hydrocarbon solvents such as cyclohexane, methylcyclohexane, and decahydronaphthalene; chlorinated hydrocarbon solvents such as chlorobenzene, dichlorobenzene, trichlorobenzene, methylene chloride, chloroform, carbon tetrachloride, and tetrachloroethylene; alcohol solvents such as methanol, ethanol, n-propanol, iso-propanol, n-butanol, sec-butanol, and tert-butanol; ketone solvents such as acetone, methyl ethyl ketone, and methyl isobutyl ketone; ester solvents such as ethyl acetate, and dimethyl phthalate; and ether solvents such as dimethyl ether, diethyl ether, di-n-amyl ether, tetrahydrofuran, and dioxyanisole. Alternatively, suspension polymerization or emulsion polymerization may be carried out using water as a solvent. These solvents may be used alone or two or more kinds thereof may be used.

By the use of the solvent(s), the reaction solution preferably becomes a homogeneous phase, but may become a plurality of heterogeneous phases.

In order to perform the graft reaction in a region where the liquid containing the base polymer can be homogeneously stirred, the concentration of the base polymer in the liquid is usually set to 50 to 500 g/L, but is preferably set to 200 to 500 g/L to achieve a high graft ratio.

The radical initiator and the carbodiimide monomer may be added all at once to a liquid containing the base polymer (or the base polymer itself) to initiate the graft reaction, but to achieve a high graft ratio, the graft reaction is preferably performed by sequentially adding the radical initiator and the carbodiimide monomer over a period of about 0.1 to 5 hours.

When the radical initiator and the carbodiimide monomer are added to the base polymer or a solution in which the base polymer is dissolved or dispersed in a solvent, the order of addition is not particularly limited. For example, when the radical initiator and the carbodiimide monomer are added sequentially as described above, the radical initiator and the carbodiimide monomer may be added sequentially, or the radical initiator may be added sequentially after the carbodiimide monomer is added first.

The graft reaction is desirably performed at a temperature of usually 60°C or higher, preferably 100°C or higher, and usually 200°C or lower, preferably 160°C or lower, for usually 2 hours or more, preferably 3 hours or more, and usually 10 hours or less, preferably 8 hours or less.

From the present modified product obtained by the graft reaction, the solvent used, the unreacted radical initiator and carbodiimide monomer, and the non-grafted polymer produced as a by-product may be purified and isolated by known methods such as filtration, centrifugation, reprecipitation and/or washing.

In this case, from the viewpoint of, for example, easily obtaining the present adhesive having more excellent adhesion, the non-grafted polymer that is contained in the present modified product is desirably purified and isolated so that the content thereof becomes preferably 5% by mass or less and more preferably 2% by mass or less.

### <<Laminate for battery>>

A laminate for a battery according to one embodiment of the present invention (hereinafter also referred to as "the present laminate") includes an adhesive layer formed of the present adhesive and a metal layer. In the present laminate, at least a part of the adhesive layer is preferably in contact with the metal layer, from the viewpoint of, for example, further exhibiting the effects of the present invention.

As adhesives (for batteries) that are used in conventional multilayer films for batteries, carboxy group-modified polyolefins have been in use. This multilayer film for a battery is in contact with an electrolytic solution, and it is considered that the incorporation of water into the electrolytic solution generates an acid, the generated acid cuts the bond of the adhesion surface of the multilayer film for a battery, and the adhesion strength thereby decreases.

On the other hand, in the adhesive layer in the present laminate, the adhesion strength does not easily decrease even after coming into contact with an electrolytic solution, and in particular, the adhesion strength after contact with an electrolytic solution becomes higher than before the contact due to the action of the electrolytic solution, and it is thus considered that the present laminate including such an adhesive layer becomes a laminate for a battery that is stable (resistant to the occurrence of delamination) over a long period of time.

The present laminate is used for batteries, and in particular, suitably used for packaging materials of batteries (packaging materials for batteries) or tab leads. The batteries are not particularly limited, and examples thereof include lithium-ion secondary batteries.

The present laminate is not limited to a laminate film (sheet) shape, and may have any of various known shapes such as a hollow container and a bag.

The present laminate is not particularly limited as long as the laminate includes the adhesive layer and a metal layer, and the adhesive layer(s) may be present on one surface of the metal layer or on both surfaces of the metal layer and may be fully or partially present on these surfaces.

In the present laminate, the laminate may include two or more of the adhesive layers, and may include two or more of the metal layers. When two or more of the adhesive layers are included, these layers may be the same layers or may be different layers. In addition, when two or more of the metal layers are included, similarly, these layers may be the same layers or may be different layers.

The adhesive layer is a layer formed of the present adhesive.

The content of the present adhesive in the adhesive layer is preferably 80% to 100% by mass and more preferably 90% to 100% by mass.

The inclusion of the present modified product in the adhesive layer can be determined by infrared spectroscopic analysis.

The thickness of the adhesive layer is not particularly limited and may be appropriately selected depending on the application of the present laminate, but is preferably 2 to 1000 µm.

The metal layer refers to a layer containing a metal or a metal compound, and examples of the metal include aluminum, an aluminum alloy, SUS (stainless steel), and titanium. Among these, from the viewpoint of, for example, further exhibiting the effects of the present invention, aluminum and an aluminum alloy are preferable, and aluminum is more preferable.

The metal layer may have, for example, an oxide film formed on a surface thereof, and the metal layer may be a layer having a surface on which a treatment such as a chemical conversion treatment has been performed.

In addition, on the surface of the metal layer, a conventionally known surface treatment such as a corona treatment may be performed to improve the adhesion strength.

The thickness of the metal layer is not particularly limited, but needs to be set to the same thicknesses of metal layers that are used for batteries, particularly, for example, packaging materials for batteries or tab leads, and is preferably 1 to 500 µm.

A method for manufacturing the present laminate is not particularly limited, a conventionally known method can be employed, and specific examples thereof include a method (1) in which an adhesive layer is formed of the present adhesive by, for example, press molding, extrusion molding, or injection molding in advance and the formed adhesive layer and a metal layer are laminated together and a method (2) in which an adhesive layer during, for example, extrusion molding, injection molding, or calendar molding is heat-fused to a metal layer.

In addition, examples thereof also include a method in which the present adhesive is applied onto a metal layer and the adhesive is dried as necessary, thereby manufacturing the present laminate and a method in which a metal layer is immersed in the present adhesive, the metal layer is taken out from the present adhesive, and the present adhesive on the metal layer is dried as necessary, thereby manufacturing the present laminate.

Examples of a method for laminating the adhesive layer and the metal layer formed in the method (1) include a method in which the adhesive layer and the metal layer are heat-fused using, for example, a calendar rolling machine or a compression molding machine at a temperature of the melting temperature of the adhesive layer or higher.

At the time of manufacturing the laminate by pressing (heat-sealing) the adhesive layer and metal layer using this compression molding machine, for example, in the case of heat-sealing the adhesive layer and metal layer at 180°C, the present laminate having a high adhesion strength can be formed even when the heat-sealing time is as short as preferably 20 seconds or less, more preferably 10 seconds or less, and still more preferably 5 seconds or less.

The present laminate is usually used in a state where the adhesive layer is adhered to a desired adherend (another layer). That is, the present laminate may have an adhesive structure, in which a metal layer, an adhesive layer, and an adherend (another layer) are laminated in this order.

The present laminate may include two or more of other layers. When two or more of other layers are included, these layers may be the same layers or may be different layers.

Examples of another layer include layers that are used for batteries, in particular, for example, packaging materials for batteries or tab leads. Another layer is not particularly limited as long as the layer is a layer other than the adhesive layer and the metal layer, and examples thereof include layers containing or composed of a thermoplastic resin such as polyester, polyphenylene sulfide, polyamide, polyacetal, polycarbonate, poly(meth)acrylate, an olefin polymer, polystyrene, rubber, a modified fluororesin, a biomass plastic, or other engineering plastic; or a thermosetting resin. Among these, another layer is preferably a polypropylene layer, from the viewpoints that the polypropylene layer can be suitably used for batteries, in particular, for example, packaging materials for batteries or tab leads. The polypropylene layer may be stretched, but is preferably not stretched.

The thickness of another layer is not particularly limited, but needs to be set to the same thicknesses of layers that are used for batteries, particularly, for example, packaging materials for batteries or tab leads, and is preferably 1 to 500 µm.

At the time of manufacturing the present laminate including another layer, the present laminate may be manufactured using an adhesive layer and another layer molded in advance by a known method, for example, press molding, extrusion molding, or injection molding, or the present adhesive and a material for forming another layer may be laminated together by a known method, for example, coextrusion molding, laminate molding, blow molding, or co-injection molding.

### <<Packaging material for battery>>

A packaging material for a battery according to one embodiment of the present invention includes the present laminate, particularly, the present laminate in which the metal layer is an aluminum layer.

The packaging material for a battery may be a packaging material for a battery composed of the present laminate (alone) or may include a conventional known layer that is included in a conventionally known packaging material for a battery.

Examples of the packaging material for a battery include a packaging material (thermocompression-bonded body) in which one or two laminate(s) having the metal layer, the adhesive layer, and an inner layer laminated in this order, or an inner layer, an inside adhesive layer, the metal layer, an outside adhesive layer, and an outer layer laminated in this order is(are) thermocompression-bonded such that the inner layers come into contact with each other.

The inside adhesive layer in the packaging material for a battery is the adhesive layer formed of the present adhesive.

The packaging material for a battery may have a conventionally known layer between these layers or on the surface of the laminate.

Examples of the inner layer include the same layers as another layer, and a polypropylene layer is preferable.

Examples of the outer layer include the same layers as another layer, in order to impart, for example, heat resistance during the thermocompression bonding, moldability during processing, pinhole resistance, or insulation during distribution, preferable examples thereof include stretched or unstretched films such as polyester films, polyamide films, and polypropylene films, and the outer layer may be a single layer or a multilayer film having two or more layers laminated together.

The outside adhesive layer is preferably a layer that makes the outer layer and the metal layer adhere to each other, may be the adhesive layer formed of the present adhesive, and may be a layer that is obtained using a conventionally known adhesive such as an adhesive for dry lamination or a solvent-free adhesive.

The packaging material for a battery usually packages a positive electrode, a negative electrode, a separator, and an electrolytic solution and is used as a battery.

The positive electrode and the negative electrode are usually disposed so as to come into contact with the electrolytic solution and to face each other with a gap therebetween through the separator.

The electrolytic solution is not particularly limited, and examples thereof include electrolytic solutions containing an organic solvent such as ethylene carbonate, diethyl carbonate, dimethyl carbonate, or vinylene carbonate; a lithium salt such as lithium hexafluorophosphate.

### <<Tab lead>>

A tab lead according to one embodiment of the present invention includes the present laminate, particularly, the present laminate in which the metal layer is an aluminum layer.

The tab lead may be a tab lead composed of the present laminate (alone) or may include a conventional known layer that is included in a conventionally known tab lead.

### Examples

One embodiment of the present invention will be described below with reference to Examples, but the present invention is not limited to these Examples.

### <Method for measuring graft ratio>

The ¹H-NMR spectrum of a graft polymer obtained in the following synthesis example was obtained using Nuclear Magnetic Resonance Spectrometer AVANCE IIIcryo-500 (500 MHz) made by Bruker Biospin under conditions of measurement solvent: 1,1,2,2-tetrachloroethane-d2, measurement temperature: 120°C, spectrum width: 20 ppm, pulse repetition time: 7.0 seconds, and pulse width: 5.00 µsec (45° pulse). In the obtained spectrum, the graft ratio of the graft polymer obtained in the following synthesis example was calculated from the peak intensity ratio between protons of hydrocarbon groups bonded to carbodiimide groups present in 3.0 ppm to 4.0 ppm and protons bonded to all hydrocarbon groups derived from the base polymer present in 0.3 ppm to 2.5 ppm.

### [Synthesis Example 1]

Into a 500 mL separable flask, 22.5 g of polypropylene (a base polymer, Mw: 157,000, Mn: 31,000, Mw/Mn: 5.06) and 62 mL of xylene were charged, and the separable flask was substituted with nitrogen gas. Thereafter, the internal temperature of the flask was raised to 120°C, and while maintaining the temperature, 44.2 mmol of ethyl-tert-butylcarbodiimide methacrylate was charged, and then 18.4 mmol of tert-butylperoxyisopropyl monocarbonate (PERBUTYL I, manufactured by NOF Corporation) dissolved in 10 mL of xylene was fed over 10 minutes while stirring at a stirring rate of 400 rpm using a double anchor blade. Thereafter, the mixture was further stirred for 3 hours, and then 100 mL of xylene was fed to dilute the reaction solution.

Thereafter, the internal temperature of the separable flask was cooled to 50°C, and then a slurry-like reaction solution was taken out. To the obtained reaction solution, 400 mL of acetone was added, and after stirring for 10 minutes, the stirred solution was filtered and separated into solids and filtrate. The step from the addition of acetone to the filtration was further repeated three times on the obtained solids. Unreacted ethyl-tert-butylcarbodiimide methacrylate and a homopolymer of the ethyl-tert-butylcarbodiimide methacrylate were removed by these four times of filtration.

The solids after the fourth filtration were dried in a vacuum dryer at 90°C for 10 hours to obtain 23.18 g of a graft polymer (P-1). The graft ratio was 4.0% by mass.

### [Synthesis Example 2]

Into a 500 mL glass vessel, 25.0 g of polypropylene (the same polymer as the base polymer used in Synthesis Example 1) and 110 mL of xylene were charged, and the inside of the vessel was substituted with nitrogen gas. Thereafter, the internal temperature of the vessel was raised to 120°C, and while maintaining the temperature, 33.4 mmol of maleic anhydride was charged, and then 2.2 mmol of tert-butylperoxyisopropyl monocarbonate (PERBUTYL I, manufactured by NOF Corporation) dissolved in 10 mL of xylene was added dropwise over 10 minutes while stirring at a stirring rate of 400 rpm using a double anchor blade. Thereafter, stirring was further conducted for 3 hours.

Next, 200 mL of xylene was added, the internal temperature of the vessel was slowly cooled to 50°C, then, a slurry-like reaction solution was taken out, and 400 mL of acetone was added to the obtained reaction solution and stirred for 10 minutes. Thereafter, the reaction solution was filtered and separated into solids and filtrate. The obtained solids were washed three times with 400 mL of acetone to remove unreacted maleic anhydride.

The obtained solids were dried in a vacuum dryer at 90°C for 10 hours to obtain 25.01 g of a graft polymer (CP-1). The graft ratio was 0.62% by mass.

### [Example 1]

16 Parts by mass of the graft polymer (P-1) manufactured in Synthesis Example 1 and 84 parts by mass of polypropylene (the same polymer as the base polymer used in Synthesis Example 1) were kneaded using LABO PLASTOMILL under conditions of a temperature of 190°C, a screw speed of 60 rpm, and a kneading time of 10 minutes, thereby obtaining an adhesive for a battery C-1.

The obtained adhesive for a battery C-1 had an MFR (230°C, 2.16 kg load) of 3.5 g/10 minutes and a density of 0.902 g/cm³, and the amount of the carbodiimide group per 100 g of the obtained adhesive for a battery C-1 was 3.1 mmol.

### [Example 2]

An adhesive for a battery C-2 was obtained in the same manner as in Example 1 except that in Example 1, the amount of the graft polymer (P-1) used was changed to 4 parts by mass, and the amount of the polypropylene used was changed to 96 parts by mass.

The obtained adhesive for a battery C-2 had a density of 0.903 g/cm³, and the amount of the carbodiimide group per 100 g of the adhesive for a battery C-2 was 0.8 mmol.

### [Example 3]

An adhesive for a battery C-3 was obtained in the same manner as in Example 1 except that in Example 1, the amount of the graft polymer (P-1) used was changed to 8 parts by mass, and the amount of the polypropylene used was changed to 92 parts by mass.

The obtained adhesive for a battery C-3 had a density of 0.903 g/cm³, and the amount of the carbodiimide group per 100 g of the adhesive for a battery C-3 was 1.5 mmol.

### [Example 4]

An adhesive for a battery C-4 was obtained in the same manner as in Example 1 except that in Example 1, the amount of the graft polymer (P-1) used was changed to 38 parts by mass, and the amount of the polypropylene used was changed to 62 parts by mass.

The obtained adhesive for a battery C-4 had a density of 0.901 g/cm³, and the amount of the carbodiimide group per 100 g of the adhesive for a battery C-4 was 7.3 mmol.

### [Comparative Example 1]

An adhesive for a battery CC-1 was obtained in the same manner as in Example 1, except that 13 parts by mass of the graft polymer (CP-1) manufactured in Synthesis Example 2 and 87 parts by mass of polypropylene (the same polymer as the base polymer used in Synthesis Example 1) were used.

The obtained adhesive for a battery CC-1 had an MFR (230°C, 2.16 kg load) of 2.1 g/10 minutes and a density of 0.892 g/cm³, the amount of an acid anhydride group per 100 g of the adhesive was 0.8 mmol, and graft-modified products by a carbodiimide monomer were not contained.

### <Amount of carbodiimide group or acid anhydride group>

The amounts (mmol) of the carbodiimide group or the acid anhydride group per 100 g of the adhesives for a battery obtained in Examples 1 to 4 and Comparative Example 1 were calculated from the following formula (I). 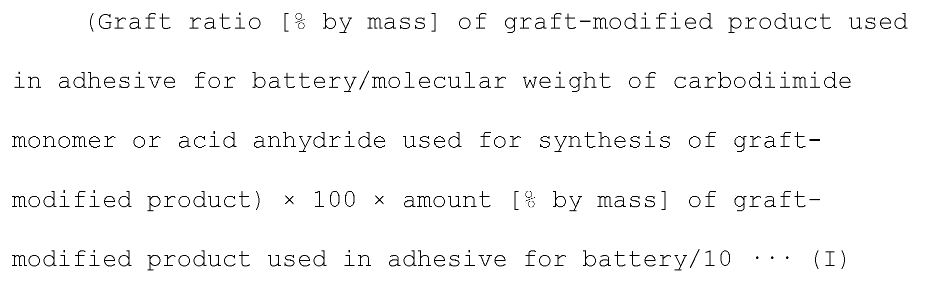 (Graft ratio [% by mass] of graft-modified product used in adhesive for battery/molecular weight of carbodiimide monomer or acid anhydride used for synthesis of graft-modified product) × 100 × amount [% by mass] of graft-modified product used in adhesive for battery/10 (I)

### <Density>

The densities (g/cm³) of the adhesives for a battery obtained in Examples 1 to 4 and Comparative Example 1 were measured according to JIS K 7210.

### <Adhesion evaluation>

### · Production of press sheet

Each of the adhesives for a battery obtained in Examples 1 to 4 and Comparative Example 1 was press-molded at a temperature of 170°C, a pressure of 4 MPa, a preheating time of 8 minutes, and a pressing time of 3 minutes, and then quenched for 3 minutes in a press molding machine set at 20°C to produce a press sheet having a thickness of 500 µm, a length of 80 mm, and a width of 80 mm.

### · Production of laminate for battery

As a metal layer, an aluminum foil having a thickness of 100 µm, a length of 80 mm, and a width of 80 mm was used.

A TEFLON (R) sheet, the aluminum foil, the press sheet, and a TEFLON (R) sheet were stacked in order, heat-sealed for 3 seconds in a heat sealer having a (lower) press plate set to a temperature of 180°C and an (upper) press plate set to a temperature of 180°C under a condition of a heat seal pressure of 0.15 MPa, and the TEFLON (R) sheets were removed, thereby producing a laminate for a battery composed of two layers of the aluminum foil and the press sheet (adhesive layer).

### · Peeling test (before immersion in electrolytic solution)

Using the produced laminate for a battery, the aluminum foil and the press sheet were T-peeled from each other under the conditions of a peeling atmosphere temperature of 23°C, a peeling rate of 300 mm/min, and a peel width of 15 mm, and the adhesion strength between the aluminum foil and the press sheet (adhesion strength before immersion in the electrolytic solution) was measured.

### · Peeling test (after immersion in electrolytic solution)

The produced laminate for a battery was immersed in an electrolytic solution of 85°C (composition: ethylene carbonate/diethyl carbonate = 3% by volume/7% by volume, vinylene carbonate content = 0.5% by mass, lithium hexafluorophosphate = 1 M, H₂O content = 1000 ppm) for 7 days.

The laminate for a battery immersed in the electrolytic solution for 7 days was taken out from the electrolytic solution, the aluminum foil and the press sheet in the laminate for a battery taken out from the electrolytic solution were T-peeled from each other under the conditions of a peeling atmosphere temperature of 23°C, a peeling rate of 300 mm/min, and a peel width of 15 mm, and the adhesion strength between the aluminum foil and the press sheet (adhesion strength after immersion in the electrolytic solution) was measured. Results are shown in Table 1.

Whether or not the adhesion strength increased before and after the immersion in the electrolytic solution was evaluated by the following evaluation standards. Results are shown in Table 1.

O: When the adhesion strength before the immersion in the electrolytic solution was regarded as 100%, the adhesion strength after the immersion in the electrolytic solution was 130% or more.

X: When the adhesion strength before the immersion in the electrolytic solution was regarded as 100%, the adhesion strength after the immersion in the electrolytic solution was less than 100%.

**[Table 1]**

| | Example 1 | Example 2 | Example 3 | Example 4 | Comparative Example 1 |
|---|---|---|---|---|---|
| Graft polymer | P-1 | P-1 | P-1 | P-1 | CP-1 |
| Amount of carbodiimide group per 100 g of adhesive (mmol) | 3.1 | 0.8 | 1.5 | 7.3 | 0 |
| Density of adhesive (g/cm³) | 0.902 | 0.903 | 0.903 | 0.901 | 0.892 |
| Adhesion strength after immersion in electrolytic solution (N/15 mm) | 8.1 | 6.1 | 9.5 | 7.1 | 3.1 |
| Whether or not adhesion strength increases before and after immersion in electrolytic solution | O | O | O | O | X |

According to one embodiment (Example) of the present invention, it was possible to form an adhesive layer having a higher adhesion strength after coming into contact with an electrolytic solution than that before coming into contact with the electrolytic solution.

On the other hand, a conventional adhesive for a battery (Comparative Example) had a lower adhesion strength after coming into contact with an electrolytic solution.

The decrease in the adhesion strength is considered to arise from the generation of an acid in the electrolytic solution. It is considered that even in the case of using electrolytic solutions other than the electrolytic solution used in the test, similarly, an acid was generated, and thus the same results as in Table 1 are exhibited even in the case of using electrolytic solutions other than the electrolytic solution used in the test.

## Claims

1. A battery adhesive satisfying the following requirements (i) to (iii):
(i) a graft-modified product of at least one base polymer selected from polyolefins with at least one carbodiimide monomer selected from the group consisting of a compound represented by the following formula (1) and a compound represented by the following formula (2) is contained;
(ii) 0.1 to 50 mmol of a carbodiimide group is contained per 100 g of the battery adhesive; and
(iii) a density is 0.870 to 0.940 g/cm³; 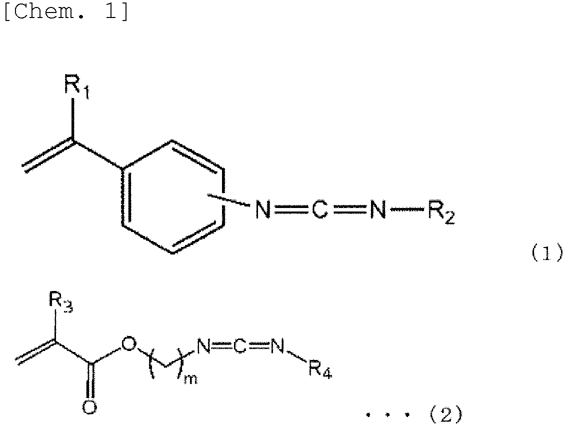
wherein in the formula (1), R₁ is a hydrogen atom or a methyl group, and R₂ is an alkyl group or aryl group optionally having a substituent, and
in the formula (2), R₃ is a hydrogen atom or a methyl group, R₄ is an alkyl group or aryl group optionally having a substituent, and m is an integer of 2 or more.

2. The battery adhesive according to claim 1, wherein R₂ is an alicyclic ring-containing aliphatic hydrocarbon group having 4 to 20 carbon atoms.

3. The battery adhesive according to claim 1, wherein R₃ is a methyl group, R₄ is a branched and ring-free alkyl group, and m is 2.

4. The battery adhesive according to claim 1, wherein the base polymer is a polymer being free of at least one active hydrogen-containing group selected from a carboxy group, an acid anhydride group, an amino group, a hydroxy group, and a thiol group.

5. A battery laminate comprising:
an adhesive layer formed of the battery adhesive according to any one of claims 1 to 4; and
a metal layer.

6. The battery laminate according to claim 5, wherein the metal layer is an aluminum layer.

7. A battery packaging material or a tab lead comprising the battery laminate according to claim 6.
